# FASCICULE DE BREVET EUROPEEN

(11) **EP 2 462 072 B1**
(45) Date de publication et mention de la délivrance du brevet: **25.05.2016**
(21) Numéro de dépôt: 10762730.9
(22) Date de dépôt: 06.08.2010
(51) Int. Cl.: C04B 24/02, C04B 28/02, C04B 40/00

(54) **UTILISATION D'UNE COMPOSITION COMPRENANT AU MOINS UN CORPS GRAS ET AU MOINS UN AGENT ANTI-MOTTANT COMME ADJUVANT ANTI-PELLICULE DE SURFACE POUR LIANTS HYDRAULIQUES**
VERWENDUNG EINER ZUSAMMENSETZUNG ENTHALTEND EINE FETTIGE KOMPONENTE UND EIN ANTIBACKMITTEL ALS ANTI-FILMBILDENDE ADDITIVMISCHUNG FÜR OBERFLÄCHEN VON HYDRAULISCHEN BINDEMITTELN
USE OF A COMPOSITION COMPRISING A FATTY COMPONENT AND AN ANTI-CAKING AGENT AS ANTI-SKIN FORMING ADMIXTURE FOR SURFACES ON HYDRAULIC BINDERS

(30) Priorité: 07.08.2009 FR 0955586
(43) Date de publication de la demande: 13.06.2012
(73) Titulaire: Chryso S.A.S., 92440 Issy-Les-Moulineaux (FR)
(72) Inventeur: MATEO, Sandrine, F-77760 Ury (FR); BOUSTINGORRY, Pascal, F-91650 Breuillet (FR); PELLERIN, Bruno, F-77210 Avon (FR); SEDAN, David, 82000 Montauban (FR)
(74) Mandataire: Blot, Philippe Robert Emile
(86) Numéro de dépôt international: PCT/FR2010/051666
(87) Numéro de publication internationale: WO 2011/015792

(56) Documents cités:
- WO-A1-95/04008
- WO-A1-03/101910
- FR-A- 1 329 281
- JP-A- 2006 193 416

## Description

La présente invention concerne l'utilisation d'une composition selon la revendication 1.

Il est d'usage de couler des chapes de mortier au sol afin d'aplanir, niveler ou surfacer un support et/ou enrober un plancher chauffant pour ensuite recevoir les couches supérieures (tous types de support : carrelage, sol souple, parquet flottant ou collé etc.).

Après coulage, prise et séchage à la surface de chapes, on observe fréquemment l'apparition d'une pellicule de surface de quelques centièmes de millimètres d'épaisseur formée de particules à base d'hydrates de calcium remontant à la surface. La fine pellicule présente des plissements et des écaillages inesthétiques et réduit considérablement les capacités d'adhérence à la surface des matériaux de finition destinés à recouvrir ultérieurement les chapes, tels que du plâtre, céramiques, peintures, enduits divers ou autres.

On observe ce type de pellicule également en surface d'autres compositions hydrauliques comme le béton autoplaçant (BAP), un béton susceptible de se mettre en place dans les coffrages même complexes et encombrés sous le seul effet de la pesanteur.
Pour obtenir une adhérence suffisante des matériaux de finition à la surface, il se révèle nécessaire de brosser, gratter ou poncer la surface avant de commencer les travaux de finition pour en éliminer la pellicule. Ces travaux sont longs et onéreux.
Il est connu de US 6,849,118 d'utiliser un adjuvant comprenant un agent anti-retrait de type oxydes d'alkylène et un alcool gras pour empêcher la formation de poussières en surface provoquée par l'agent anti-retrait.
On connaît également de WO03/101910 des compositions de cure de mortiers ou bétons frais assurant simultanément la rétention d'eau et une capacité d'adhésion renforcée, sous forme d'émulsion aqueuse comprenant une paraffine associée à une charge pulvérulente d'origine minérale et/ou organique.
On connaît également de JP 2006-193416 un adjuvant anti-retrait comportant un composé hydrophobe contenant un alcool et un ester et une poudre poreuse.
On connaît enfin de FR 1 329 281 un procédé de fabrication de mortier ou de béton possédant une résistance mécanique et une compacité élevées. Il propose en particulier d'éliminer l'air du mortier ou béton en ajoutant des alcools gras à l'état solide et à l'état de dispersion moléculaire.

On connaît par ailleurs de WO 95/04008 d'utiliser des alcools gras en C₁₄ à C₂₂ pour inhiber l'efflorescence dans les compositions de ciment, de préférence sous forme émulsion. L'efflorescence diffère cependant de la pellicule de particule décrite en ce qu'elle résulte d'une réaction de carbonatation de sels de calcium en surface de compositions de ciment.

Du fait de leur faible point de fusion et de leur caractère hydrophobe, les alcools gras sont cependant difficiles à disperser et s'agglomèrent rapidement sous la chaleur ou encore lors du stockage sous leur propre poids, ce qui rend leur utilisation malaisée.

Le but de la présente invention est donc de proposer l'utilisation d'un adjuvant permettant de réduire la formation de pellicules sur des surfaces horizontales de compositions hydrauliques sous une forme facilement dispersible et stable pour des températures comprises entre -10°C et 60°C ainsi qu'au stockage.

Selon l'invention, ce problème est résolu par l'utilisation d'un adjuvant comportant au moins un corps gras et au moins un agent anti-mottant.

L'invention vise donc l'utilisation d'un adjuvant anti-pellicule de surface pour liants hydrauliques comprenant au moins un corps gras et au moins un agent anti-mottant.

On entend par le terme « corps gras » désigner des composés comportant une fonction polaire et une chaîne carbonée comportant plus de 8 atomes de carbone, notamment des alcools gras.

On entend par le terme « liant hydraulique » désigner des compositions de ciment tels que les ciments Portland, les mortiers comprenant en outre des granulats fins et les bétons, comprenant en outre des granulats grossiers. Le terme englobe également les sulfates de calcium anhydres ou hydratés.

Selon l'invention, l'adjuvant anti-pellicule pour liants hydrauliques selon la revendication 1 comprend au moins un corps gras et un agent anti-mottant.

Le corps gras peut être notamment un alcool gras ou un composé dérivé d'alcool gras. Il comporte de préférence 8 à 22 atomes de carbone, de préférence 10 à 18 atomes de carbone et tout particulièrement 16 à 18 atomes de carbone, avantageusement sous forme de chaîne carbonée. La chaîne carbonée peut être droite ou ramifiée, saturée ou insaturée. De préférence, le corps gras est un alcool gras primaire, dans lequel le groupe alcool se trouve en fin de chaîne.

Particulièrement préférés sont les corps gras comportant une chaîne carbonée droite saturée, comme le hexadécan1-ol et l'octadécan-1-ol ou un de leurs mélanges.

L'adjuvant selon la revendication 1 peut contenir un seul corps gras ou plusieurs, par exemple lorsqu'il s'agit d'un corps gras d'origine naturelle.

L'agent anti-mottant permet à l'adjuvant selon la revendication 1 de rester sous forme de poudre fine et dispersée. Cette présentation permet non seulement une dispersion homogène dans le liant hydraulique mais assure par ailleurs une stabilité au stockage à température ambiante et jusqu'à 60 °C.

L'agent anti-mottant est généralement un composé minéral inerte solide à température ambiante. De préférence, l'agent anti-mottant est finement divisé.

Avantageusement, l'agent anti-mottant solide présente une taille de particules moyenne comprise entre 0,1 et 100 µm et de préférence comprise entre 0,5 et 5 µm. Particulièrement préférée est une taille de particules de l'ordre de 1 µm. En effet, en présence d'un agent anti-mottant finement divisé, la capacité d'inhiber la formation d'une pellicule d'un corps gras varie très peu avec la température.

Les agents anti-mottant particulièrement préférés sont des composés minéraux comme les oxydes, silicates et carbonates, qui interfèrent peu ou pas avec la prise de la composition hydraulique. Parmi ces composés minéraux, on préfère particulièrement le carbonate de calcium, le kaolin, l'alumine ou la silice.

Parmi ces composés, le carbonate de calcium est peu coûteux, disponible et de ce fait particulièrement préféré.

Par ailleurs, il s'est avéré que certains agents anti-mottant sont colorés et peuvent de ce fait également assurer la fonction de colorant. Des agents anti-mottants colorés particulièrement préférés sont les oxydes de fer.

L'adjuvant comprend de préférence entre 10% et 99 %en poids de corps gras et 90% à 1 % en poids d'agent d'anti-mottant, de préférence 40 à 60 % en poids de corps gras et 60 à 40 % en poids d'agent anti-mottant et tout particulièrement environ 50% de corps gras et 50% d'agent anti-mottant.

Avantageusement, l'adjuvant selon la renvedication 1 est constitué des deux composantes mentionnées. Toutefois, il peut être utile dans certains cas d'ajouter d'autres agents, notamment des agents anti-mousse, plastifiants, notamment superplastifiants, modificateurs de prise.

L'adjuvant selon la revendication 1 peut comprendre en outre un colorant minéral ou organique en sus de l'agent anti-mottant choisi. La quantité de colorant dans l'adjuvant selon l'invention peut être par exemple comprise entre 100 et 200% en poids par rapport au mélange de corps gras et agent anti-mottant.

Le procédé de préparation d'un adjuvant selon la revendication 1 comporte les étapes consistant à :
(i) cryobroyage du corps gras jusqu'à obtention de la granulométrie souhaitée; et
(ii) mélange du corps gras broyé avec l'agent anti-mottant et les autres constituants de l'adjuvant, le cas échéant.

Comme indiqué ci-dessus, la granulométrie souhaitée du corps gras est de préférence une taille de particules moyenne de l'ordre de 0,1 à 200µm.

L'adjuvant ainsi obtenu se présente sous forme de poudre fluide et peut être ensuite conditionné sans difficultés en flacon, en sachet délitable ou non avant utilisation. L'adjuvant ainsi conditionné est stable au stockage pendant plusieurs mois même à température élevée.

La présentation sous forme de poudre fluide facilite par ailleurs grandement la mise en oeuvre de l'adjuvant selon l'invention.

En effet, l'adjuvant selon l'invention est un adjuvant de masse et non de surface. Il est donc avantageusement dispersé de manière homogène dans la masse de liant hydraulique, avant, pendant ou après gâchage.

De préférence, l'adjuvant selon la revendication 1 est ajouté au liant hydraulique sec, avant gâchage. En effet, grâce à la présence de l'agent anti-mottant, l'adjuvant se présente de préférence sous forme de poudre fluide qui peut être aisément dispersée dans la masse de liant hydraulique.
De manière générale, le dosage de l'adjuvant selon la revendication 1 est compris entre 50 g et 1500 g /m³ de chape ou de béton.

Le gâchage et coulage des liants hydrauliques est réalisé de manière habituelle. Avantageusement, l'adjuvant n'interfère pas avec la prise du liant hydraulique et n'affecte pas les propriétés du matériau durci.

L'adjuvant selon la revendication 1 ainsi introduit dans la masse avec le liant hydraulique permet d'empêcher la formation d'une pellicule formée de particules d'hydrates à base de calcium apparaissant après coulage, prise et séchage à la surface des liants hydrauliques. L'absence de pellicule permet d'augmenter notablement l'adhérence des matériaux de finition aux surfaces des liants hydrauliques adjuvantés et améliore par ailleurs la dureté des surfaces.

Le procédé de préparation d'une composition de liant hydraulique adaptée pour la fabrication de chapes comporte l'étape consistant à ajouter au liant hydraulique l'adjuvant selon la revendication 1 à un dosage compris entre 50 et 1500 g/ m³ de chape ou de béton.

L'invention sera mieux comprise grâce aux exemples ci-après présentés à titre illustratif et non limitatif.

### EXEMPLES

### EXEMPLE 1 : Composition et fabrication d'une chape anhydrite

Dans un malaxeur de type Rayneri, on prépare un mortier adjuvanté à base de sulfate de calcium anhydre ayant la composition indiquée dans le tableau 1 ci-dessous en suivant le protocole de gâchage suivant :
- Homogénéisation à sec du sable à vitesse lente entre 0-30 secondes ;
- Préhumidification du sable avec 1/3 de l'eau totale entre 30-60 secondes, puis arrêt du malaxeur ;
- A 300 secondes, introduction du sulfate de calcium anhydre avec l'adjuvant selon l'invention et homogénéisation entre 300-330 secondes à vitesse lente ;
- Ajout du reste de l'eau avec le dispersant entre 330 et 390 secondes ;
- Malaxage à vitesse lente entre 390-420 secondes ;
- Arrêt du malaxeur pour racler les bords et le fond du bol à la truelle entre 420-450 secondes ; et
- Malaxage à vitesse rapide entre 450 et 510 secondes.

**Tableau 1 : Composition de mortier à base de sulfate de calcium anhydre**

| Composant | Quantité |
|---|---|
| Sulfate de calcium anhydre | 650 kg/m³ |
| Sable 0/4 mm de Bernières (France) | 1350 kg/m³ |
| Dispersant (Chryso®Fluid Premia 196, vendu par CHRYSO, France) | 0,27% en poids * |
| Eau | 280 kg/m³ |

| | |
|---|---|
| *en liquide par rapport à la quantité de sulfate de calcium anhydre | |

L'étalement mesuré au cône (∅_{supérieur}=7cm, ∅_{inférieur}=10cm, hauteur=6cm) immédiatement après préparation était de 260 ±10 mm. Le mortier ainsi réalisé est coulé dans des moules carrés à bords obliques préalablement huilés de dimensions 40*40 cm de manière à réaliser des dalles de mortier, et la surface du dit mortier est soumise au passage d'une barre de débullage et de mise à niveau pour obtenir une surface lisse.

### EXEMPLE 2 : Composition et fabrication d'une chape ciment

Dans un malaxeur de type Rayneri, on prépare un mortier adjuvanté à base de ciment ayant la composition indiquée dans le tableau 2 ci-dessous en suivant le protocole de gâchage suivant :
- Homogénéisation à sec du sable à vitesse lente entre 0-30 secondes ;
- Préhumidification du sable avec 1/3 de l'eau totale entre 30-60 secondes, puis arrêt du malaxeur ;
- A 300 secondes, introduction du ciment et du filler avec l'adjuvant selon l'invention et homogénéisation entre 300-330 secondes à vitesse lente;
- Ajout du reste de l'eau avec le dispersant entre 330 et 390 secondes ;
- Malaxage à vitesse lente entre 390-420 secondes ;
- Arrêt du malaxeur pour racler les bords et le fond du bol à la truelle entre 420 et 450 secondes ; et
- Malaxage à vitesse rapide entre 450 et 510 secondes.

L'étalement mesuré au cône (∅_{supérieur}=7cm, ∅_{inférieur}=10cm, hauteur=6cm) immédiatement après préparation est de 260 ±10mm. Le mortier ainsi réalisé est coulé dans des moules carrés à bords obliques préalablement huilés de dimensions 40*40 cm de manière à réaliser des dalles de mortier, et la surface du mortier est soumise au passage d'une barre de débullage et de mise à niveau pour obtenir une surface lisse.

**Tableau 2 : Composition de mortier à base de ciment**

| Composant | Quantité |
|---|---|
| ciment de type CEM I | 280 kg/m³ |
| Filler Durcal 10 (vendu par OMYA, France) | 380 kg/m³ |
| Sable Bernières (France) | 1280 kg/m³ |
| Dispersant (CHRYSO^{®}Fluid Optima 100, vendu par CHRYSO, France) | 1,2% en poids * |
| Eau | 260 kg/m³ |

| | |
|---|---|
| *en liquide par rapport à la quantité de liant (ciment+filler) | |

### EXEMPLE 3 : Composition et fabrication d'un béton autoplaçant (BAP)

Dans un malaxeur de type Skako Couvrot, on prépare un BAP adjuvanté ayant la composition indiquée dans le tableau 3 ci-dessous en suivant le protocole de gâchage suivant :
- Homogénéisation à sec du sable et des graviers à vitesse lente entre 0-30 secondes ;
- Préhumidification du sable avec 1/3 de l'eau totale de l'ensemble des granulats entre 30-60 secondes, puis arrêt du malaxeur ;
- A 300 secondes, introduction du ciment et du filler avec l'adjuvant selon l'invention et malaxage à sec entre 300-330 secondes ;
- Ajout du reste de l'eau avec le superplastifiant entre 330 et 390 secondes ; et
- Arrêt du malaxeur à 510 secondes.

L'étalement mesuré au cône normalisé (cône d'Abrams) du béton immédiatement après préparation est de 700 ±10 mm. Le béton ainsi réalisé est coulé dans des moules carrés à bords obliques préalablement huilés de dimensions 40*40 cm de manière à réaliser des dalles de béton, et la surface du béton est soumise au passage d'une barre de débullage et de mise à niveau pour obtenir une surface lisse.

**Tableau 3 : Composition de béton auto-plaçant**

| Composant | Quantité |
|---|---|
| ciment de type CEM I | 280 kg/m³ |
| Filler Erbray (vendu par OMYA, France) | 160 kg/m³ |
| Sable 0/4 de Bernières (France) | 887 kg/m³ |
| Gravier 6/10 de Villermain (France) | 160 kg/m³ |
| Gravier 9/18 de Loire (France) | 653 kg/m³ |
| Dispersant (CHRYSO^{®}Fluid OPTIMA 350, vendu par CHRYSO, France) | 0,7% en poids * |
| eau | 213 kg/m³ |

| | |
|---|---|
| *en liquide par rapport à la quantité de liant (ciment+filler). | |

### EXEMPLE DE COMPARAISON 4 : Pas d'adjuvant

Afin d'évaluer l'effet de l'adjuvant selon l'invention, on a préparé une dalle selon l'exemple 1, sans l'adjuvant selon l'invention.

Une partie des dalles obtenues a été évaluée telle quelle, sans traitement (exemple 4A) alors qu'une autre partie a été soumise à un ponçage (exemple 4B).

### EXEMPLE DE COMPARAISON 5 : Corps gras seul

Afin d'évaluer l'effet de l'adjuvant selon l'invention, on a préparé une dalle de mortier selon l'exemple 1 en ajoutant en outre un mélange de 66% en poids d'1-hexadécanol et 33% en poids d'1-octadécanol commercialisé sous le nom de NAFOL 1618 par la société SASOL (avec un D50 ≈ 40 µm).

L'alcool gras est introduit lors du malaxage au même moment que le liant hydraulique, à raison de 250g/m³ comme indiqué dans les tableaux 4 et 5.

### EXEMPLE 6 : Corps gras et Agent anti-mottant

Afin d'évaluer l'effet de l'adjuvant selon l'invention, on a préparé une dalle de mortier selon l'exemple 1 en ajoutant en outre un mélange de 50 % en poids d'un mélange de 66% en poids d'1-hexadécanol et 33% en poids d'1-octadécanol commercialisé sous le nom de NAFOL 1618 par la société SASOL (avec un D₅₀ ≈ 40 µm) et de 50 % en poids de carbonate de calcium (D₅₀ ≈ 1.5 µm).

L'adjuvant selon l'invention est introduit lors du malaxage au même moment que le liant hydraulique, à raison de 500g/m³ comme indiqué dans les tableaux 4 et 5.

### EXEMPLE DE COMPARAISON 7 : Corps gras et Agent réducteur de retrait

Afin d'évaluer l'effet de l'adjuvant selon l'invention, on a préparé une dalle de mortier selon l'exemple 1, en ajoutant en outre un mélange de 66% en poids d'1-hexadécanol et 33% en poids d'1-octadécanol commercialisé sous le nom de NAFOL 1618 par la société SASOL (avec un D50 ≈ 40 µm) et 2% en liquide de CHRYSO®Serenis (agent réducteur de retrait commercialisé par la société CHRYSO, France).

L'alcool gras est introduit lors du malaxage au même moment que le liant hydraulique, à raison de 250g/m³ comme indiqué dans les tableaux 4 et 5.

### EVALUATION DE L'ADHERENCE

Après 7 jours, des carreaux grès céramiques de dimension 50 x 50 mm sont collés sur la surface des dalles obtenues dans les exemples 4 à 7 ci-dessus au moyen d'un mortier colle à carrelage (colle LANKO Prolidal Plus 5024 commercialisée par la société PAREX LANKO). Ce mortier colle est appliqué selon la norme NF EN 1348 qui consiste à :
- étaler le mortier colle avec un peigne aux dents carrées 5 x 5 x 5 mm ;
- déposer une charge de 2kg pendant 25 à 35 secondes sur chaque carreau en cours de collage, 9 carreaux étant collés par dalle ;
- sécher le mortier colle pendant 21 jours à température ambiante (suivant les conditions de la norme NF EN 1348) ;
- coller des tés d'arrachage sur les carreaux de céramique au moyen d'une colle époxy (LANKO 723, commercialisée par la société PAREX LANKO) ; et
- arracher un jour après les carreaux par l'intermédiaire des tés en mesurant la force nécessaire à l'aide d'un dynamomètre type Dynatest.

Une fracture entre deux matériaux assemblés par collage peut se propager de deux manières : soit à l'intérieur du joint de colle ou du support (chape ou béton) : il s'agit alors d'une rupture cohésive, soit à la surface, et on parle alors de rupture adhésive.

Une rupture cohésive indique que l'interface s'est comportée de manière plus forte que le coeur de la colle ou du support (chape ou béton). Inversement, pour une rupture adhésive, l'interface a été plus faible.

Le mode de rupture (adhésif ou cohésif), ainsi que la force de traction nécessaire pour arracher les carreaux des dalles permettent d'évaluer la capacité d'adhérence des surfaces. Les résultats obtenus sont rassemblés dans le tableau 4 ci-dessous.

On constate que l'adhérence est très faible pour les dalles non adjuvantées sans traitement de ponçage. Par ailleurs, lors de la réalisation des essais on observe visuellement une meilleure dispersion de l'alcool gras dans la chape lorsqu'il est associé avec l'agent anti-mottant.

On constate que l'adjuvant selon la renvedication 1 permet de recouvrir une surface avec une contrainte de traction proche d'une surface poncée, avec un avantage économique très net.

Par ailleurs, on note que l'association d'un alcool gras à un agent de réducteur de retrait augmente la pellicule de surface et réduit ainsi encore la contrainte de traction de la surface.

**Tableau 4 : Evaluation de l'adhérence**

| **EXEMPLE** | **Adjuvants / Traitement** | **Dosage en g/m³** | **Contrainte de traction [MPa] / Mode de rupture** |
|---|---|---|---|
| 4A | Pas d'adjuvant, non poncée | - | 0.4 MPa / adhésif |
| 4 B | Pas d'adjuvant, poncée | - | 2.0 MPa / cohésif |
| 5 | Alcool gras non anti motté | 250 g/m³ | Résultats inhomogènes dus à une mauvaise dispersion du produit dans la chape |
| 6 | Alcool gras + CaCO₃ | 500 g/m³ | 1.6 MPa / cohésif |
| 7 | Alcool gras + agent réducteur de retrait | 250 g/m³ | 0.6 MPa / adhésif |

### EVALUATION DE LA DURETE DE SURFACE

Afin d'évaluer l'effet de l'adjuvant selon la revendication sur la dureté de surface, les dalles préparées dans les exemples 4 à 7 ont été testés au moyen d'un dispositif appelé Perfotest type CSTB.

Le Perfotest permet la réalisation de chocs reproductibles sur des surfaces horizontales. Il est équipé d'un poinçon 5 dièdres destiné à la mesure de la dureté d'un revêtement de classe P2 et P3. Suivant la hauteur à laquelle le poinçon est lâché, on applique une force différente, P3 étant supérieure à P2. Les résultats sont exprimés en nombre de carrés décollés, dégradés ou intacts. Ainsi, plus le nombre de carrés intact est grand, et plus la dureté de surface est grande ou moins la pellicule de surface est présente, à la fois pour une classification type P2 et une type P3. Les essais sont réalisés directement en surface des dalles exempte de tout revêtement de surface. Les mesures sont réalisées 4 fois à différents endroits sur chaque dalle à la fois sur essais type P2 et type P3.

Les résultats du test sont consignés dans le tableau 5 ci-dessous.

On constate que la dureté de surface est très faible pour les dalles non adjuvantées par l'adjuvant selon la revendication 1 sans traitement de ponçage. Par ailleurs, lors de la réalisation des essais on observe visuellement une meilleure dispersion de l'alcool gras dans la chape lorsqu'il est associé avec l'agent anti-mottant.

Par ailleurs, l'association d'un alcool gras à un agent réducteur de retrait augmente la pellicule de surface et réduit ainsi encore la dureté de surface.

**Tableau 5 : Evaluation de la dureté de surface**

| **EXEMPLE** | **Adjuvants / Traitement** | **Dosage en g/m³** | **Dureté de surface** |
|---|---|---|---|
| 4A | Pas d'adjuvant selon la revendication 1, non poncée | | - - |
| 4B | Pas d'adjuvant selon l'invention, poncée | | + |
| 5 | Alcool gras | 250 g/m³ | Résultats inhomogènes dus à une mauvaise dispersion du produit dans la chape |
| 6 | Alcool gras + CaCO₃ | 500 g/m³ | ++ |
| 7 | Alcool gras + Agent réducteur de retrait | 250 g/m³ | - - - |

L'utilisation d'une composition selon la revendication 1 permet donc d'améliorer notablement la dureté de surface et la capacité d'adhérence de surfaces de liants hydrauliques à base de ciment ou de sulfate de calcium tout en étant facilement dispersible et stable au stockage.

## Revendications

1. Utilisation d'une composition comprenant au moins un corps gras et au moins un agent anti-mottant comme adjuvant anti-pellicule de surface pour liants hydrauliques.

2. Utilisation selon la revendication 1, dans lequel le corps gras est un alcool gras.

3. Utilisation selon les revendications 1 ou 2, dans lequel le corps gras est un alcool gras primaire.

4. Utilisation selon l'une des revendications 1 à 3, dans lequel le corps gras comporte 8 à 22 atomes de carbone.

5. Utilisation selon l'une des revendications 4, dans lequel le corps gras est choisi parmi l'hexadécan1-ol et l'octadécan-1-ol ou un de leurs mélanges.

6. Utilisation selon la revendication 5, dans lequel l'agent anti-mottant présente une taille de particules moyenne comprise entre 0,1 et 100 µm.

7. Utilisation selon l'une des revendications 1 à 6, dans lequel l'agent anti-mottant est un carbonate, silicate ou un oxyde.

8. Utilisation selon la revendication 7, dans lequel l'agent mottant est choisi parmi le carbonate de calcium, le kaolin, l'alumine et la silice.

9. Utilisation selon l'une des revendications 1 à 7, dans lequel l'agent anti-mottant est coloré et/ou un oxyde de fer.

10. Utilisation selon l'une des revendications 1 à 9, comprenant 10 à 99 % en poids de corps gras et 1 à 90 % en poids d'agent anti-mottant.

11. Utilisation selon l'une des revendications 1 à 10, comprenant 40 à 60 % en poids de corps gras et 60 à 40 % en poids d'agent anti-mottant.

12. Utilisation selon l'une des revendications 1 à 11, comprenant un agent anti-mottant coloré.

13. Utilisation selon l'une des revendications 1 à 12, dans laquelle l'adjuvant est sous forme de poudre.

14. Utilisation selon l'une des revendications 1 à 12, dans laquelle l'adjuvant est ajouté au liant hydraulique sec avant l'eau de gâchage.

## Patentansprüche

1. Verwendung einer Zusammensetzung aufweisend mindestens eine Fettsubstanz und mindestens ein Antibackmittel als Oberflächenantifilm-Hilfsmittel für hydraulische Bindemittel.

2. Verwendung nach Anspruch 1, wobei die Fettsubstanz ein Fettalkohol ist.

3. Verwendung nach Anspruch 1 oder 2, wobei die Fettsubstanz ein primärer Fettalkohol ist.

4. Verwendung nach einem der Ansprüche 1 bis 3, wobei die Fettsubstanz 8 bis 22 Kohlenstoffatome aufweist.

5. Verwendung nach Anspruch 4, wobei die Fettsubstanz aus Hexadekan-1-ol und Octadekan-1-ol oder einer deren Mischungen ausgewählt ist.

6. Verwendung nach Anspruch 5, wobei das Antibackmittel eine mittlere Teilchengröße zwischen 1 und 100 µm aufweist.

7. Verwendung nach einem der Ansprüche 1 bis 6, wobei das Antibackmittel ein Carbonat, ein Silikat oder ein Oxid ist.

8. Verwendung nach Anspruch 7, wobei das Antibackmittel aus Kalziumkarbonat, Kaolin, Aluminiumoxid und Siliciumoxid ausgewählt ist.

9. Verwendung nach einem der Ansprüche 1 bis 7, wobei das Antibackmittel gefärbt und/oder Eisenoxid ist.

10. Verwendung nach einem der Ansprüche 1 bis 9 aufweisend 10 bis 99 Gewichts-% Fett und 1 bis 90 Gewichts-% Antibackmittel.

11. Verwendung nach einem der Ansprüche 1 bis 10 aufweisend 40 bis 60 Gewichts-% Fett und 60 bis 40 Gewichts-% Antibackmittel.

12. Verwendung nach einem der Ansprüche 1 bis 11 aufweisend ein gefärbtes Antibackmittel.

13. Verwendung nach einem der Ansprüche 1 bis 12, wobei das Hilfsmittel in Form eines Pulvers ist.

14. Verwendung nach einem der Ansprüche 1 bis 12, wobei das Hilfsmittel auf das trockene hydraulische Bindemittel vor Anmachwasser zugegeben wird.

## Claims

1. The use of a composition comprising at least one fat and at least one anti-caking agent as an anti-surface film forming admixture for hydraulic binders.

2. The use according to claim 1, wherein the fat is a fatty alcohol.

3. The use according to claims 1 or 2, wherein the fat is a primary fatty alcohol.

4. The use according to one of claims 1 to 3, wherein the fat includes 8 to 22 carbon atoms.

5. The use according to one of claims 1 to 4, wherein the fat is selected from hexadecan1-ol and octadecan-1-ol or one of their mixtures.

6. The use according to claim 5, wherein the anti-caking agent has an average particle size comprised between 0,1 and 100 µm.

7. The use according to one of claims 1 to 6, wherein the anti-caking agent is a carbonate, silicate or oxide.

8. The use according to claim 7, wherein the anti-caking agent is selected from calcium carbonate, kaolin, alumina or silica.

9. The use according to one of claims 1 to 7, wherein the anti-caking agent is a mineral or organic coloring agent.

10. The use according to one of claims 1 to 9, comprising 10 to 99% by weight of fat and 1 to 90% by weight of anti-caking agent.

11. The use according to one of claims 1 to 10, comprising 40 to 60% by weight of fat and 60 to 40% by weight of anti-caking agent.

12. The use according to one of claims 1 to 11, comprising a colored anti-caking agent.

13. The use according to one of claims 1 to 12, wherein the admixture is in the form of powder.

14. The use according to one of claims 1 to 12, wherein the admixture is added to the dry hydraulic binder before the water for mixing.
